Europäisches Patentamt

European Patent Office

Office européen des brevets

(19)

(11) **EP 0 978 837 A1**

(12) **EUROPEAN PATENT APPLICATION**

(43) Date of publication:
**09.02.2000 Bulletin 2000/06**

(51) Int Cl.$^7$: **G11B 15/467**

(21) Application number: **99305762.9**

(22) Date of filing: **21.07.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventor: **Walsh, Robert Edward**<br>Bristol BS30 7BP (GB) |
| (30) Priority: **07.08.1998 EP 98306335** | (74) Representative: **Lawman, Matthew John Mitchell**<br>Hewlett-Packard Limited,<br>IP Section,<br>Building 2,<br>Filton Road |
| (71) Applicant: **Hewlett-Packard Company**<br>Palo Alto, California 94304 (US) | Stoke Gifford, Bristol BS12 6QZ (GB) |

(54) **Intelligent tracking offset system for tape cartridge data storage**

(57) In a data storage device configurable to write and read a stream of data as a sequence of tracks in a direction transverse to a main length of a data storage medium there is provided a method of minimizing a difference between a path followed by a read head of said data storage device and a path followed by a plurality of written tracks of data on said data storage medium the method comprising: reading a plurality of data block fragments comprising at least one of said written tracks from said data storage medium (1401); storing a position of each of said plurality of fragments within said track(s) of read data in a memory device (1402); storing a time of reading each fragment of said plurality of fragments of said track of read data within a memory device (1402); calculating a difference between positions of said read fragments on said data storage medium and corresponding ideal positions (1404, 1405, 1406, 1407, 1408); using said difference to modify said path followed by said read head of said data storage device (1409).

```
┌──────────────────────────┐
│   Read 96 fragments      │ ── 1401
│   comprising 1 track     │
└──────────────────────────┘
             │
             ▼
┌──────────────────────────┐
│  Write fragment no.s and │ ── 1402
│  timestamps to a table   │
└──────────────────────────┘
             │
             ▼
┌──────────────────────────┐
│  For T₀ , T₂₃, T₄₇, T₇₁, │ ── 1403
│  and T₉₅ do steps        │
│  1404-1409               │
└──────────────────────────┘
             │
             ▼
┌──────────────────────────┐
│  Calculate drum angles   │ ── 1404
│  for the timestamp       │
│  in step 1403            │
└──────────────────────────┘
             │
             ▼
┌──────────────────────────┐
│  Obtain ideal drum angles│ ── 1405
│  timestamps in step 1403 │
│  from stored values      │
└──────────────────────────┘
             │
             ▼
┌──────────────────────────┐
│  Modify ideal drum angle │ ── 1406
│  values by adding        │
│  interpolated TT         │
│  calibration value       │
└──────────────────────────┘
             │
             ▼
┌──────────────────────────┐
│ Calculate the difference │ ── 1407
│ between the drum angles  │
│ in step 1404 and 1406    │
└──────────────────────────┘
             │
             ▼
┌──────────────────────────┐
│  Calculate the width     │ ── 1408
│  error for each          │
│  timestamp in step 1403  │
└──────────────────────────┘
             │
             ▼
┌──────────────────────────┐
│ Use offtrack errors      │ ── 1409
│ calculated in 1408       │
│ to adjust TT calibration │
└──────────────────────────┘
```

For $T_0$ , $T_{23}$, $T_{47}$, $T_{71}$, and $T_{95}$ do steps 1404-1409

Fig. 14

EP 0 978 837 A1

Printed by Jouve, 75001 PARIS (FR)

## Description

### Field of the Invention

The present invention relates to writing of data to data storage devices, and particularly although not exclusively to a method for minimizing the differences between the path swept out by a read head and a written track during a read operation.

### Background to the Invention

In order to store digital electronic data it is known to use magnetic tape cartridges comprising a pair of reels which are inserted into a tape drive unit having a plurality of read/write heads. Typically such magnetic tape data storage devices may be used to back up data generated by host devices, eg a computer, or to store data generated by test or measurement instruments.

Typically, conventional magnetic tape data storage units operate to draw an elongate magnetic tape past a plurality of read/write heads. Tape speeds past the heads are relatively slow, of the order of a few centimeters per second. In tape based magnetic data recording systems, data may be recorded using a plurality of write heads and read with a plurality of read heads. Conventionally, these write and read heads may be either substantially stationary with respect to the rest of the device, in which case, data are stored in a plurality of tracks parallel to the elongate direction of the tape, or the write or read heads may be mounted on a drum which is rotated about an axis which is transverse to a direction of movement the tape, resulting in data which is stored in a series of tracks written side by side diagonally across the width of the magnetic tape, the diagonal tracks laying in parallel to each other along the length of the tape. A taped based magnetic data recording system having a plurality of read/write heads mounted on a rotatable drum which is configured to record a series of tracks written side by side diagonally across the width of a magnetic tape data storage medium is also known herein as a helical scan magnetic data recording system.

The process by which a read head mounted on a rotating drum is configured to follow a substantially similar path to one of a plurality of recorded tracks on a magnetic tape is known herein as tracking. It is known to use various methods to ensure that the read head or a write head of a magnetic data recording system accurately track a recorded track on tape.

US 5,001,580 discloses a method for compensating for misalignment of a magnetic recording tape with respect to read/write head block in a magnetic tape data storage device having a plurality of substantially fixed read/write heads. The method comprises writing a predetermined test signal diagonally across the magnetic tape and using measured time differences between the time at which the test signal crosses a plurality of read heads to calculate an azimuthal displacement of the read/write heads with respect to the elongate direction of the magnetic tape.

US 5,050,018 discloses a magnetic tape data storage system having read/write heads mounted on a rotating drum which records a series of tracks written diagonally across the width of the magnetic tape. The magnetic tape data storage system disclosed in this document includes a means for recording blocks of control information in the recorded tracks along with data which can be used to compensate for any curvature of the recorded tracks caused by, for example, misalignment of the magnetic tape on the magnetic drum housing the read/write heads. This document discloses a method of using a servo system to displace the read/write heads in a direction parallel to the direction of travel of the magnetic tape in order to find a best straight line through a plurality of curved tracks recorded on the magnetic tape.

WO 93/26005 discloses a magnetic data storage device in which read/write heads are mounted near the periphery of a circular planar surface and rotated thereon about an axis passing through the center of the circular surface and through the plane of a longitudinally moving magnetic tape. The rotating heads write a sequence of arcuate tracks which are transverse to the longitudinal axis of the magnetic tape. WO 93/26005 discloses a method of maintaining a close correspondence between the paths traced by the rotating read/write heads and the arcuate tracks recorded on the magnetic tape. Accurate following of the recorded tracks is achieved by moving the location of the axis of rotation of the rotating read/write heads under the action of a servo mechanism.

US 5,191,491 discloses a data storage device having read/write heads mounted on a rotating drum which are configured to record data on a magnetic tape as a sequence of tracks diagonally across a magnetic tape. In order to correct for any curvature in the tracks there is applied a method of including servo information within each of the tracks to enable track distortion to be detected and the effects of any such distortion minimized by using a servo mechanism to modify the position of the rotating drum containing the read/write heads thereby modifying paths swept out by the read/write heads.

US 5,243,473 discloses a magnetic tape data storage device having a rotating drum onto which are mounted read/write heads which write data in a sequence of tracks diagonally across an elongate magnetic tape. US 5,243,473 discloses a method for calibrating the angular location of the read/write heads mounted on the rotating drum with respect to the elongate edges of the magnetic tape.

US 5,323,276 discloses a method of optimizing the position of a read/write head in a data storage device with respect to a track written to a data storage medium. The data storage device disclosed in US 5,323,276 is configured to write a plurality of parallel tracks in a direction substantially parallel to the elongate length of the magnetic tape data storage medium. The method disclosed includes a means for detecting an error in a previously written track of data and if an error is detected during a read process the magnetic tape data storage medium is rewound and the read heads of the data storage device are moved a small distance in a direction transverse to the main length of the elongate magnetic tape data storage medium and the recorded tracks in order to ensure that the read head follows line of the recorded track.

In prior art helical scan magnetic data recording systems a significant problem can occur if the elongate magnetic tape is misaligned with respect to the rotating drum. Such misalignment can introduce significant curvature into the tracks written to the magnetic tape. If a sequence of tracks are recorded to a magnetic tape using a particular rotating drum to tape orientation and the tape is subsequently replayed with a different rotating drum to tape orientation then the paths traced by the read/write heads during a rotation of the rotating drum during a read operation may differ significantly from the curved tracks recorded on the magnetic tape.

In order to achieve a high density of data recorded onto magnetic tape storage media there is an ongoing trend to decrease the width of individual tracks recorded on the tape. As recorded tracks become narrower the effects of track curvature on the ability of data back up systems to accurately reproduce recorded data become more marked. In order to maximize the amount of data that can be recorded on a magnetic tape it is important to minimize any tracking errors between the paths traced by read/write heads and the recorded tracks.

**Summary of the Invention**

Specific embodiments and methods according to the present invention aim to improve the ability of read heads in a magnetic tape data storage device to read tracks of data present on a magnetic tape data storage medium, where there occurs a meandering of a path taken by a read head relative to a track written on the magnetic tape, and thereby reduce the number of tracks which must be re-read, hence reducing the amount of wear to both tape data storage device and data storage medium.

According to a first aspect of the present invention there is provided in a data storage device configurable to read a stream of data as a sequence of tracks in a direction transverse to a main length of a data storage medium there is provided a method of minimizing a difference between a read path followed by a read head of said data storage device and a track path followed by a written track of data on said data storage medium said method characterized by comprising the steps of:

reading from said data storage medium a plurality of data blocks comprising said written track (1401);

storing in a memory device a position within said track of each of said plurality of data blocks (1402);

storing within a memory device a timestamp for each data block of said plurality of read data blocks (1402);

determining a plurality of ideal positions of said data blocks within said read track;

determining a difference between positions of said read data blocks on said data storage medium and corresponding said ideal positions (1404, 1405, 1406, 1407, 1408); and

using said difference to modify said read path followed by said read head relative to said data storage medium (1409).

Preferably said read path is modified relative to said written data track according to said difference.

Preferably said position of each of said plurality of data blocks within said track(s) of read data is stored as a number.

Said step of determining a difference between positions of said read data blocks on said data storage medium and corresponding ideal positions may comprise the steps of:

determining a position of each data block of said plurality of data blocks of said track using a corresponding timestamp (1404);

reading said ideal positions stored within said memory device (1405);

modifying said ideal positions (1406);

determining a difference between said position of said read data block and said modified ideal positions (1407);

determining a width error for each of said read data blocks (1408);

using said width errors in an algorithm to modify said path followed by said read head of said data storage device (1409).

Said step of determining a position of each data block may comprise finding an angular position from said time stamp and a rotation period of a rotating drum on which a said read head is mounted.
Preferably said angular position is determined from the equation:

angle around drum = timestamp/(Bheads period/2)

Preferably said step of modifying said ideal positions comprises determining a plurality of modified ideal data block positions from said ideal data block positions, and from a reference value.
Preferably said plurality of modified ideal data block positions are determined from the equation:

Modified angle around drum for $T_x$ = Theta (x) + TT calibration.

Said algorithm may comprise the steps of:

identifying a width error from said plurality of width errors which has a largest negative value (1501);

identifying a width error from said plurality of width errors which has a largest positive value (1502);

calculating an average width error from said largest negative value width error and said largest positive value width error (1503).

Said width error may be determined from the equation:

Width error = error around drum x tan (y)

Said algorithm may comprise the steps of:

calculating an average width error using said plurality of width errors (1601);

using said average width error to modify said path followed by said read head of said data storage device (1602).

Said algorithm may comprise the steps of:

calculating a plurality of squared width errors from said plurality of width errors (1701);

calculating an average squared width error from said plurality of squared width errors (1702);

calculating a square root of said average squared width error (1703);

using said square root of said average width error to modify said path followed by said read head of said data storage device (1704).

Preferably said step of determining a difference between positions of said read data blocks on said data storage medium and corresponding said ideal positions comprises:

selecting a plurality of pairs of time stamps from said data track;

for each said pair of time stamps, determining a mid-point of said time stamp pair; and

for each said mid-point, comparing said mid-point with an equivalent said ideal position of said read data blocks within said read track.

Preferably said data storage device comprises a helical scan magnetic tape data storage device.

Preferably said data storage medium comprises a magnetic tape (201).

According to a second aspect of the present invention there is provided a data storage device configurable to store a stream of data as a sequence of tracks on a data storage medium wherein said stream of data is partitioned into a plurality of data blocks characterized by comprising:

a means for writing said plurality of data blocks to said data storage medium (210,230);

a means for reading said plurality of data blocks from said data storage medium (220, 240);

a means for determining plurality of times when each data block of said plurality of data blocks is read;

a memory device for storing said plurality of times of reading said plurality of data blocks;

memory means storing a position of said plurality of data blocks in each track of said sequence of tracks;

a means for determining a difference between a path followed by a written track comprising said plurality of data blocks and a path followed by said reading means; and

a means for modifying a speed of said data storage medium past said reading means and said writing means (800, 810).

Preferably said data storage medium comprises a magnetic tape.

Preferably said data storage device comprises a helical scan magnetic data storage device.

## Brief Description of the Drawings

For a better understanding of the invention and to show how the same may be carried into effect, there will now be described by way of example only, specific embodiments, methods and processes according to the present invention with reference to the accompanying drawings in which:

Fig. 1 illustrates features of a data storage device and magnetic tape data storage medium contained within a removable cassette according to a specific embodiment of the present invention;

Fig. 2 illustrates schematically the path of a magnetic tape data storage medium with respect to a rotating drum containing a plurality of read heads and a plurality of write heads according to a specific embodiment of the present invention;

Fig. 3 illustrates relative positions of a recording head or reading head mounted on a rotating drum at one instant during rotation of the drum past an elongate band of magnetic tape data storage medium;

Fig. 4 illustrates a series of tracks written side by side diagonally across a width of a magnetic tape data storage medium;

Fig. 5 illustrates a track which partially overwrites a preceding track on the magnetic tape data storage medium;

Fig. 6 illustrates exemplary types of curvature produced in tracks which can occur when a magnetic tape data storage medium is misaligned with a record head during a record process;

Fig. 7 illustrates a method by which a degree of curvature of a written track on a magnetic tape data storage medium is measured according to a specific method of the present invention;

Fig. 8 illustrates schematically switching signals produced by a servo-mechanism in response to position of the rotating drum during a rotation;

Fig. 9 illustrates schematically a plurality of read heads and a plurality of write heads distributed around a rotating drum and a sensor indicating the position of the rotating drum during a rotation;

Fig. 10 illustrates schematically a set of timing signals generated in response to a sensor signal produced as a read/write head passes a fixed sensor;

Fig. 11 illustrates schematically a prior art method for calibrating an error signal for aligning a read head with a pre-written track;

Fig. 12 illustrates schematically a path taken by a read head along a pre-written track according to a prior art read method;

Fig 13. illustrates a method for determining a path which minimizes differences between a track written onto magnetic tape and the path traced by a read head during a read process according to a specific method of the present invention;

Fig 14. illustrates schematically a series of steps used in minimizing differences between a written track and a path taken by a read head during a read operation according to a specific method of the present invention;

Fig 15. illustrates schematically steps taken to minimize the differences between a written track on magnetic tape and a path traced by a read head during a read operation according to a specific method of the present invention;

Fig 16. illustrates schematically steps taken to minimize the differences between a written track on magnetic tape and a path traced by a read head during a read operation according to a specific method of the present invention;

Fig 17. illustrates schematically steps taken to minimize the differences between a written track on magnetic tape and a path traced by a read head during a process according to a specific method of the present invention; and

Fig. 18 illustrates schematically steps taken according to a fourth specific method of the present invention, for producing an error signal for modifying the speed of the magnetic tape relative to a rotating read head for obtaining improved tracking of tracks written to the tape by the rotating read head.

## Detailed Description of the Best Mode for Carrying Out the Invention

There will now be described by way of example the best mode contemplated by the inventors for carrying out the invention. In the following description numerous specific details are set forth in order to provide a thorough understanding of the present invention. It will be apparent however, to one skilled in the art, that the present invention may be practiced without limitation to these specific details. In other instances, well known methods and structures have not been described in detail so as not to unnecessarily obscure the present invention.

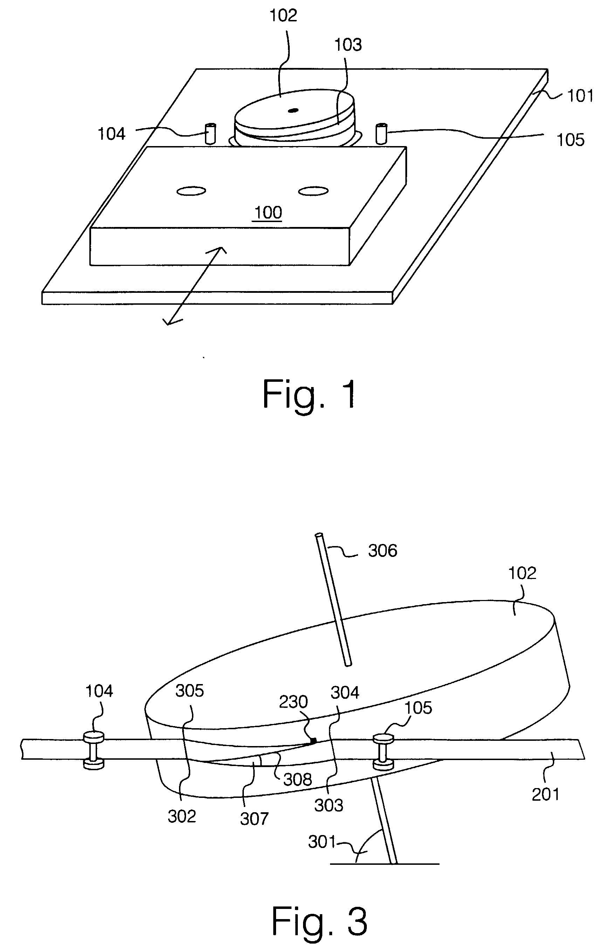

Referring to Fig. 1 herein, there is illustrated schematically a layout of a tape data storage cartridge in relation to a tape drive mechanism, in which an elongate band of tape is contained within a removable tape cartridge 100. The tape cartridge is inserted between guides (not shown) of a tape drive mechanism 101. In Fig. 1, for clarity of illustration of the problems encountered with the tape drive mechanisms, various components are omitted so as not to obscure a view of the geometry and layout in relation to the tape drive mechanism. The tape drive mechanism comprises a base plate 101 shown schematically as a substantially flat plate, and a rotating read/write head 102. The rotating read/write head comprises first and second read heads and first and second write heads, situated respectively at substantially equidistant points around a circumference of rotating head 102. Rotating head 102 rotates on top of a substantially cylindrical metallic plinth 103, the rotating read/write head 102 also being substantially cylindrical. The assembly of supporting plinth 103 and rotating head 102 is angled, such that a main central axis of a cylinder formed by the outer surfaces of the drum and plinth is directed offset from a line normal to the plane of the base plate 101, such that the effect is that as the band of tape is wrapped around part of the circumference of the cylindrical head plinth, the rotating heads describe a path diagonally across the width of the tape in successive passes off the heads past the tape. The read/write head rotates at a speed of approximately 11,400 revs per minute.

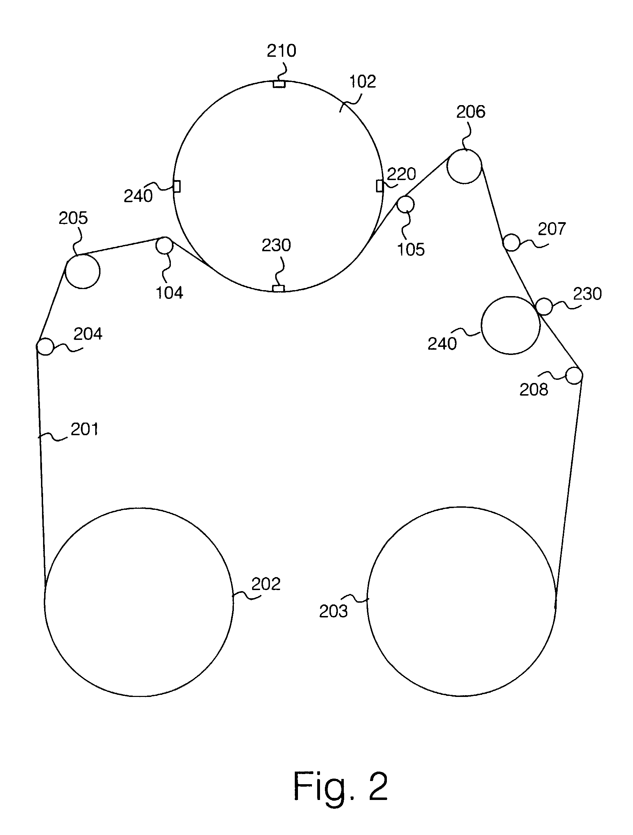

Referring to Fig. 2 herein, there is illustrated schematically a tape path of an elongate magnetic tape data storage medium 201 as it is drawn past a rotating drum containing read heads and write heads according to the best mode described herein. Elongate magnetic tape data storage medium 201 is wound onto feed reel 202 and take-up reel 203 which are housed within removable tape cartridge 100. During a normal mode of operation of the magnetic tape data storage system described herein, magnetic tape 201 is wound from feed reel 202 onto take-up reel 203. The path of the magnetic tape 201 is constrained by a plurality of rollers and tape guides including rollers 204, 205, 206, 207 and 208. In addition, tape guides 104 and 105 determine the relative positions of the rotating drum 102, the read and write heads 210-240 and the elongate magnetic tape data storage medium 201. Feed reel 202 and take up reel 203 are also driven by electric motors and act to maintain a correct tension in the magnetic tape 201.

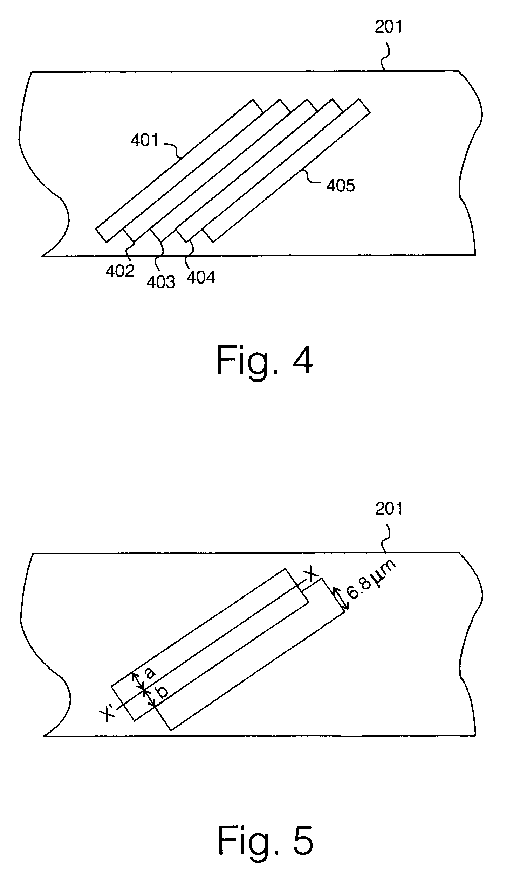

Referring to Fig. 3 herein, there is illustrated schematically the orientation of the magnetic tape 201 with respect to the rotating drum 102. Tape guides 104 and 105 are located within the data storage device such that they constrain magnetic tape 201 to follow a path diagonally across drum 102. Drum 102 rotates about its axis 306 and said axis is configured to lie at an angle 301 to a horizontal plane which is substantially parallel to base plate 101. Tape guides 104 and 105 are configured to maintain magnetic tape 201 substantially in contact with rotating drum 102 over the region defined by points 302-305. As the rotating drum 102 rotates about its axis 306 the read and write heads 210-240 sweep out paths diagonally across the magnetic tape 201. By way of example, record head 230 is illustrated having swept out diagonal track 308 during a write operation. Track 308 lies transverse to an edge of magnetic tape 201. Track 308 is inclined at an angle 307 with respect to an edge of said magnetic tape 201. The incline angle 307 is known herein as the azimuthal angle. The azimuthal angle 307 may be equal to 90° minus the angle 301 which the axis makes with a main plane of the base plate. Tape 201 is drawn past the plurality of read heads and the plurality of write heads at a relatively slow tape speed of the order a few centimeters per second. In contrast, the rotating drum 102 on which are mounted the read and write heads 201-204, is rotating at typically a few thousand revolutions per minute, so the relative speed of the read and write heads to the drum is orders of magnitudes greater than the absolute tape speed. During a write operation one of the write heads 210 and 230 records a track diagonally across the elongate magnetic tape 201. The width of the track recorded is typically 6.8 µm whereas the width of the elongate magnetic tape is typically 4 millimeters. In order to maximize the density of tracks recorded on tapes, the linear tape speed is set to a value such that each subsequent track recorded on tape partially records over an edge of the previously recorded track. As the magnetic tape is drawn slowly past the rotating drum 102 the write heads 210 and 230 successively write a series of diagonal tracks across the tape.

Referring to Fig. 4 herein, there is illustrated schematically a series of diagonal tracks 401-405 written by write heads 210 and 230. The written tracks, of which series 401-405 are included by way of example, extend across a width of the magnetic tape and along a length of the magnetic tape, extending in substantially straight lines diagonally across the tape.

Each track, 401-405, recorded onto tape comprises a fixed number of logical data blocks. According to the best mode described herein, each track comprises 96 logical data blocks having a same, fixed logical length. A fixed length logical data block is also known herein as a 'fragment'. Each physical track recorded diagonally across the magnetic tape 201 comprises 96 fragments. Each fragment is 130 bytes in length. Contained within each fragment is a header field which contains information which uniquely identifies the fragment. In particular, the header field contains information concerning the number of the track which contains the fragment and the number of the fragment within a given track.

Referring to Fig. 5. herein, there is illustrated schematically tracks written diagonally across magnetic tape 201. The write heads 210 and 230 are configured such that during one pass of a write head across the magnetic tape 201 a track 6.8 µm wide is written to the magnetic tape. As the tape is advanced past the rotating drum containing the read heads and write heads in a direction substantially parallel to a main length of the magnetic tape a second right head partially overwrites an edge of a previously written track. Preferably, each written track is substantially straight with its main length lying in a direction substantially parallel to a main center line X X', where X X' defines a center line of a written track such that a distance a to one edge of the track from the center line is equal to a distance b to another edge of the track from the center line.

If the magnetic tape 201 is aligned with respect to the rotating drum 102 such that the azimuthal angle 307 is substantially equal to 90° - angle 301, then a series of tracks written to magnetic tape 201 are substantially straight and parallel. However, there is a problem in that if the magnetic tape 201 is misaligned with respect to rotating drum 102 for example due to variations in set up of or wear on the tape guides 104, 105, then the paths traced by write heads 210-230 and read heads 220 and 240 may be curved and the series of written tracks will have significant curvature.

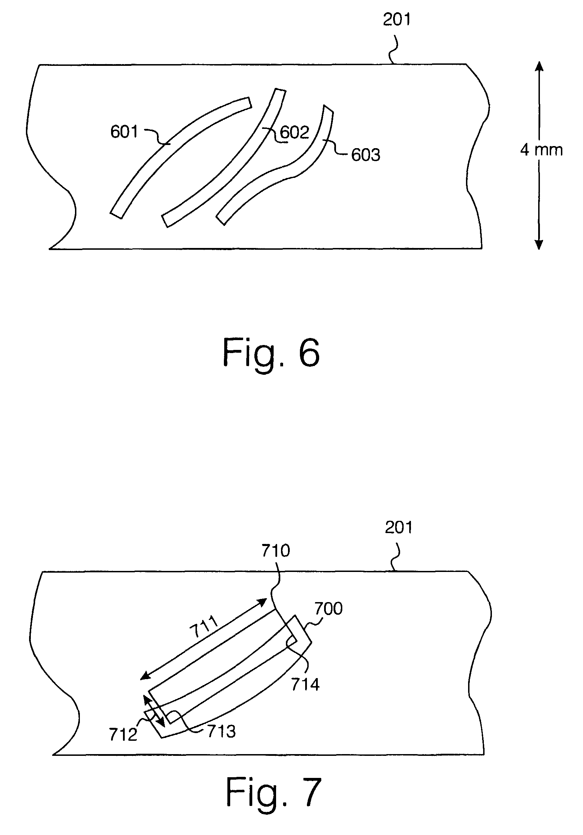

Referring to Fig. 6 herein there is illustrated schematically, by way of example a series of tracks 601-603 recorded onto magnetic tape 201. Tracks 601-603 illustrate the types of curvature exhibited by written tracks depending on the degree of misalignment of the magnetic tape 201 with respect to the rotating drum 102. It will be understood by those skilled in the art that in order to aid clarity both the degree of curvature and widths of tracks 601-603 have been exaggerated.

When a tape having recorded tracks having a degree of curvature as shown in Fig. 6 are read by a different tape drive mechanism, the path taken by the read head of the different tape data storage device may also have a curvature relative to the magnetic tape data storage medium, the curvature of the read head path may be different to the curvature of the pre-recorded track, such that the path of the read head meanders relative to the pre-recorded tracks. Depending upon the set up and wear of the tape guides 104, 105 of the device used to record the tracks, and similarly depending upon the set up of the tape data storage device used to read the tracks, there are a large number of variations of track curvatures which may be produced from device to device, and a large number of variations of read paths which may be followed across a tape, from device to device. In general, there is likely to be some degree of relative curvature between a pre-recorded track and a path taken by a read head of a data storage device, for reading that pre-recorded track.

Among the causes of misalignment between the magnetic tape 201 and rotating drum 102 are:

- Mechanical tolerances in the manufacture and location of tape guides 104 and 105; and
- Mechanical wear of the components constraining the path of the magnetic tape 201 during the lifetime of the data storage device.

Referring to Fig. 7 herein, there is illustrated schematically a method, according to the best mode presented herein, for measuring a degree of curvature of a written track 700. Preferably, it should be possible to place a box 710 in such a position that an edge of written track 700 only intersects short sides, 713 and 714, of the box. In the best mode herein, the width 712 of the box 710 is of the order of 4 $\mu$m and a length 711 of the box 710 is of the order 21.87 millimeters. In addition, a long edge of the box 710 is located such that it has azimuthal angle with respect to the edge of the tape 201 of 6° 22' 39.6".

It is observed that curvature of written tracks can result in the width 712 the box 710 being of the order 5 $\mu$m.

Tolerances in mechanical components and mechanical wear of components within individual data storage devices result in a range of both the degree of curvature and precise shape of tracks written to the magnetic tape. In order to ensure that data written to magnetic tape using one data storage device are replayable by that same device later during its operating life and also by other similar data storage devices it is necessary that the plurality of read heads of the data storage device can be configured to follow as closely as possible the written tracks. Given the high rotation speed of the rotating drum 102 it is not practicable to modify the location of the rotating drum and hence the location of the read heads in order to accurately track the curvature of a written track. However, it is possible to minimize the differences between a written track and a path traced out by a read head as it is swept past the tape during a read operation by modifying the azimuthal angle of the path traced by the read head with respect to an edge of the magnetic tape. The azimuthal angle of the path traced by the read head during a read operation can be modified by altering the speed at which the magnetic tape is drawn past the rotating drum 102 while maintaining a constant rotation speed of the rotating drum.

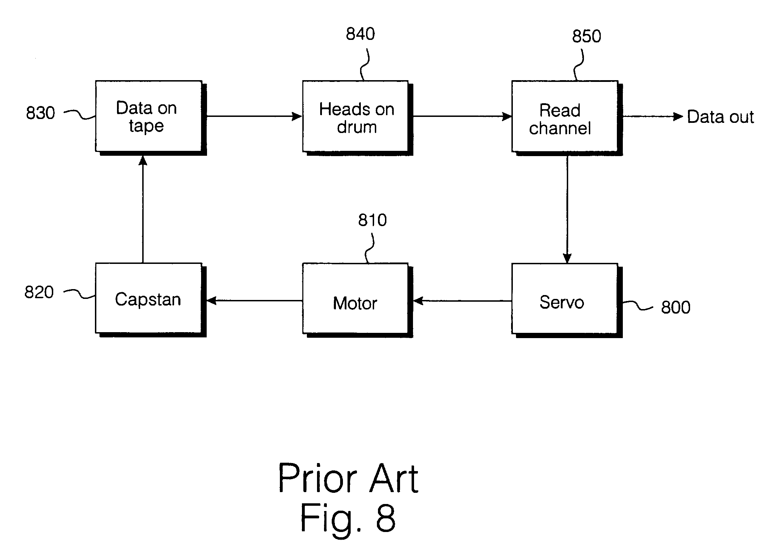

Referring to Fig. 8 herein, there is illustrated schematically a prior art device for modifying the speed at which a tape is drawn past read and write heads mounted on a rotating drum in order to minimize the difference between the path swept out by a read head during a read operation on a written track. The speed of the magnetic tape is controlled by a capstan 820 which is driven by an electric motor 810 controlled by a Servo Mechanism 800. Preferably, servo 800 includes a memory device capable of storing a numerical value which represents an interval of time.

The speed by which the magnetic tape 201 is drawn past rotating drum 102 is governed by a capstan 230 and pinchwheel 240. During the normal mode of operation of the data storage device, magnetic tape 201 is held substantially in contact with capstan 230 by pinchwheel 240. Pinchwheel 240 is configured to rotate freely about its axis while capstan 230 is driven by an electric motor. The speed of the magnetic tape 201 past the rotating drum 102 is determined by the rotational speed of electrically driven capstan 230.

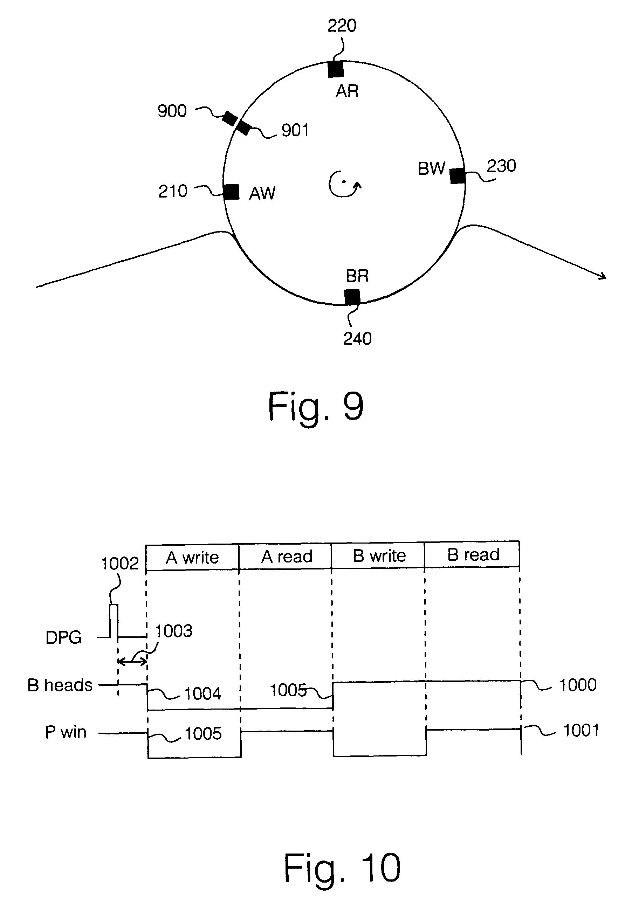

Referring to Fig. 9 herein, there is illustrated schematically the magnetic tape 201 being drawn past rotating drum 102 on which are mounted write heads 210 and 230 and read heads 220 and 240. In addition, there is a sensor device mounted on the drum which detects whenever the drum is passing a fixed reference point 900 within the data storage device. The sensor 901 is configured to generate an electrical pulse of a duration of the order a few microseconds when sensor 901 passes fixed reference point 900. The pulse, which is known hereinafter as a "DPG pulse", is used to provide a time reference to ensure that write head 210 is substantially in contact with the magnetic tape during a write operation.

The DPG pulse is used to establish the position of the write head 210 with respect to the magnetic tape. However, in order to ensure that the position of the write head 230 and read heads 220 and 240 with respect to the magnetic tape are known then additional information is required.

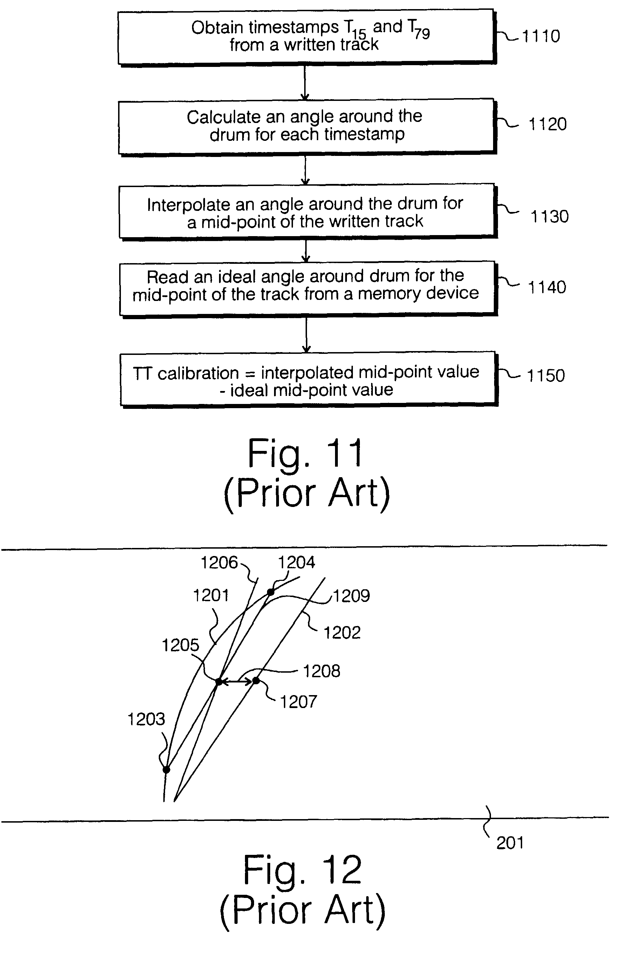

Referring to Fig. 10 herein there is illustrated schematically a series of switching signals 1000 and 1001 generated by an application specific integrated circuit (ASIC) within the servo 800 in response to a DPG pulse 1002. As sensor 910 passes fixed reference point 900 a DPG pulse 1002 is generated. When the DPG pulse 1002 is received by the servo 800 a timer is started within the ASIC. After a default time interval 1003, which is stored within a memory device in servo 800, the ASIC generates a first switching signal 1000 having a negative going edge 1004. The period of the first switching signal is equal to the rotational period of the rotating drum 102. The first switching signal is known hereinafter as the 'Bheads' signal. The time duration 1003 is set to a default value during the manufacture of the data storage device. The time interval from negative going edge 1004 to first positive going edge 1005 of the Bheads signal is made equal to half of the rotational period of the rotating drum 102. The Bheads signal is used to determine whether first write head 210 or second write head 220 write data to magnetic tape 201 during a write operation and whether first read head 220 or second read head 240 are used to read data back from magnetic tape 201 during a read operation. In addition, servo 800 also generates a second periodic switching signal 1001, known hereinafter as 'Pwin', having a period equal to half the rotational period of the rotating drum 102. The Pwin signal has a negative going edge 1005 which is configured to occur at a substantially similar instant of time as negative going edge 1004 of the Bheads signal. The Pwin signal is used to determine whether a read operation or a write operation occur during a pass of a read head or write head past the magnetic tape 201.

During manufacture of the data storage device a default value for the time duration 1003 is stored in the memory device within the ASIC contained within servo 800. However, due to mechanical tolerances there are significant differences between similar data storage devices with regards to a time that sensor 901 crosses fixed reference point 900 and a time that write head 210 is substantially in contact with the magnetic tape. In order to ensure that the tracks written to the magnetic tape are centrally located with respect to the elongate edges of the magnetic tape 201 it is necessary to adjust the duration of the time interval 1003. This process of adjusting time interval 1003 is known hereinafter as 'Bheads calibration'.

The process of Bheads calibration sets the value of time duration 1003 before the write head 210 starts writing to tape, and hence, sets the distance in from the edge of the magnetic tape that each written track commences. During a read process a time at which each of the fragments comprising one track was read is stored in a memory device within the servo 800. The time at which each fragment is read by a read head during a read operation is hereinafter known as a 'timestamp'. Each track comprises 96 fragments hence, during a read operation, there are 96 timestamps stored in the memory device. To perform the Bheads calibration a calibration tape is replayed on the data storage device. The calibration tape is a magnetic tape which has been recorded such that the tracks written on tape are substantially straight and exhibit no curvature, In addition, the written tracks are located such that corresponding points on each end of the written track are equidistant from the two elongate edges of the magnetic tape. During the Bheads calibration process the read heads 220 and 240 read a sequence of written tracks on the calibration tape. During the read operation a time stamp at which the zeroth fragment and the $95^{th}$ fragment of a track are read is noted. A time for the read head to reach the centre of the written track is calculated by forming the mean value of the time stamps for the zeroth and $95^{th}$ fragments. The mean time for a read head to reach the centre of a written track is compared with an ideal time for a read head to reach the center of a track which is permanently stored within a memory device in the servo 800. The difference between the mean time to reach the center of the written track and the ideal time to reach the center of the written track is calculated and is subtracted from the time duration 1003. The modified value of the time duration 1003 is stored within a memory device in the servo 800 completing the Bheads calibration process. Preferably, the Bheads calibration process is carried out at least once for each individual data storage device during its lifetime.

In addition to the Bheads calibration, described herein before, prior art data storage devices have also employed a second calibration method to optimize the tracking of the read heads of a data storage device with respect to written tracks on magnetic tape. This second calibration method is known hereinafter as 'TT calibration' which is performed every time a data storage device is operated. In contrast with the Bheads calibration described herein before in which a stored time duration is modified, the TT calibration seeks to minimize the differences between a path traced by a read head and a written track by modifying the rotational speed of the capstan 230 in order to modify the speed of the magnetic tape past the rotating drum 102.

A height of the first fragment written to magnetic tape with respect to an edge of the magnetic tape is set during the Bheads calibration, during the manufacture of the data storage device. The azimuthal angle that each written track makes with the edge of the magnetic tape may be modified, by changing the speed of the magnetic tape past the rotating drum.

In order to modify the tape speed of the magnetic tape 201 past the rotating drum 102 it is known to derive an error signal which is a measure of a difference between a written track on magnetic tape 201 and a path followed by a read head as it passes the magnetic tape during a read process. The error signal is known hereinafter as a 'TT calibration point'.

Referring to Fig. 11, there is illustrated schematically a prior art method for calculating the TT calibration point. The timestamp for each fragment is measured using a timing mechanism contained within servo 800. The timer mechanism measures the timestamps of fragments read by read head 220 with respect to Bheads signal edge 1004 and measures timestamps for fragments read by read head 240 with respect to B heads signal edge 1005. In step 1110, during a read operation of a written track, a timestamp $T_{15}$ associated with fragment number 15 and a time stamp $T_{79}$ associated with fragment number 79 are stored in a memory device within servo 800. A position of each fragment within the written track corresponds with an angle around rotating drum 102. For fragment number 15 and fragment number 79 the angle around the drum is calculated using the following equation.

$$\text{Angle around drum} = \text{timestamp}/(\text{Bheads period}/2) \qquad \text{(Equation 1)}$$

where Bheads period is equal to a time during which rotating drum 102 make one complete rotation. In step 1130, an angle around the drum for a mid-point of the written track is calculated by linear interpolation using the following equation:

$$\text{Midpoint angle symbol} = (\text{angle}(79) - \text{angle }(15))/2 \qquad \text{(Equation 2)}$$

Where angle (79) and angle (15) are the angles around the drum for the $79^{th}$ and $15^{th}$ fragments as calculated in step 1120. In step 1140, an ideal angle around the drum for the mid-point of the track is read from a memory device located within servo 800. In step 1150, the TT calibration point is calculated using the following equation:

$$\text{TT calibration symbol} = \text{interpolated mid-point angle} - \text{ideal mid-point angle.} \qquad \text{(Equation 3)}$$

This TT calibration point is then used by the servo to position the read heads to an ideal path along the data track during a read operation.

The prior art method for calculating the error between a written track and a path traced by a read head during a read process is based on an assumption that the written track is substantially straight. However, mis-alignment between magnetic tape 201 and the rotating drum can result in curved tracks being written to magnetic tapes. Using the prior art method described herein before the modified path of a read head may not accurately follow a curve track.

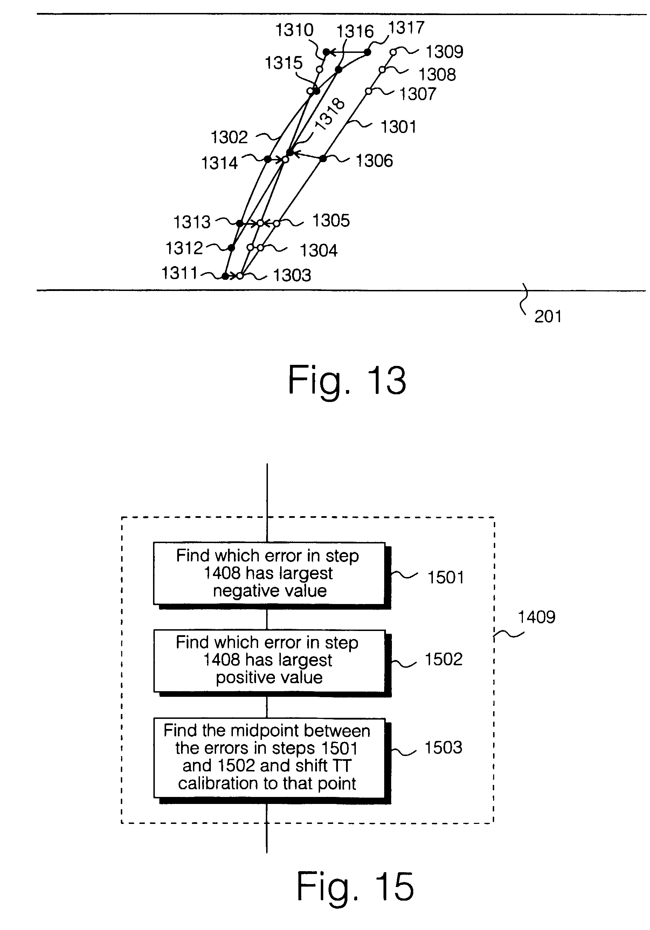

Referring to Fig. 12 herein, there is illustrated a modified path of a read head calculated for a curving written track using the prior art method described herein before. Line 1201 on magnetic tape 201 represents a centre line of a curved written track. Points 1203 and 1204 represent the starts of fragments 15 and 79 respectively. Line 1202 represents an ideal straight path traced by a read head during a read operation. Point 1207 is a mid-point of ideal path 1202. Point 1205 is an interpolated mid-point calculated according to the method described in the steps 1110 to 1130. Distance 1208 is the TT calibration value calculated in step 1150. Line 1206 represents a center line of a path traced by a read head during a read operation after the TT calibration has been applied. After TT calibration, there is still a significant difference between the path traced by the read head 1206 and the curved written track 1201. If the difference between the path traced by the read heads during a read operation and a written track is sufficiently large then a complete track of data may not be read and a read failure may result. If a read failure occurs during a read operation then a magnetic tape rewound the read operation repeated read failures resulting in increased wear of the magnetic tape and increase the time required to access data written to the magnetic tape.

Referring to Fig. 13 herein, there is illustrated an improved method for minimizing the differences between a written track and a path traced by a read head during a read operation according to a first specific method and embodiment of the present invention. Line 1302 represents a center line of a curved written track on magnetic tape 201. Line 1301 represents a center line of an ideal track such as would be recorded by a perfectly aligned and calibrated tape drive. Points 1303-1309 represent a start of the zeroth, fifteenth, twenty third, forty seventh, seventy first, seventy ninth and ninety fifth fragments of ideal track 1301. The ideal timestamps $T_0$-$T_{95}$ of fragments 1303-1309 are permanently stored within a memory device in servo 800. Line 1310 represents a line through fragments 1303-1309 after applying a correction to each timestamp by taking the difference between the ideal mid-point timestamp 1306 and the interpolated mid point time stamp 1318 as described in the steps in Fig. 11 herein before.

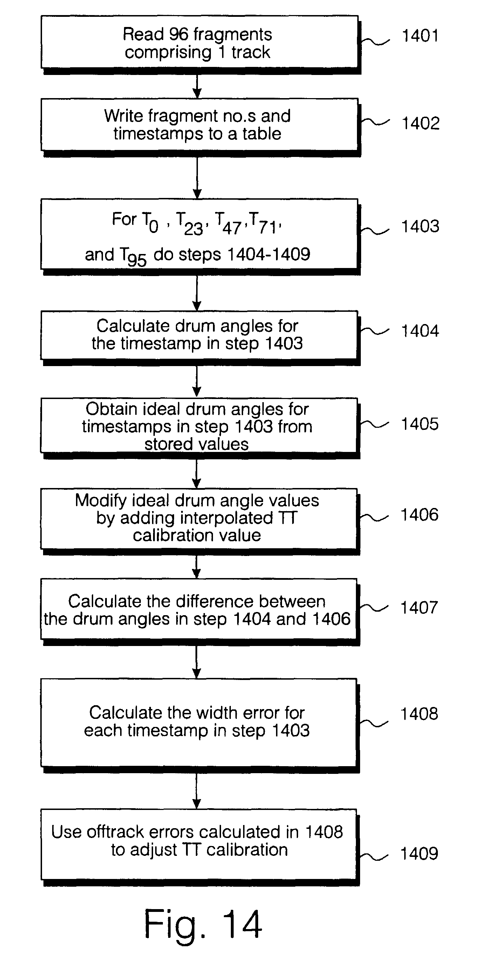

Referring to Fig. 14 herein there is illustrated schematically a sequence of steps by which TT calibration is carried out according to a first specific method presented herein. In step 1401, during a read operation, the 96 fragments comprising one track are read back from magnetic tape. In step 1402, the header field of each fragment is examined and the fragment number associated with each fragment at the time of which the fragment was read are written to a table stored in a memory device within servo 800. Referring to Table 1 herein there is shown, by way of example, a sequence of contiguous fragments comprising one track and a corresponding time stamp for each track.

| Fragment Number | Timestamp |
|---|---|
| 0 | $T_0$ |
| 1 | $T_1$ |

(continued)

| Fragment Number | Timestamp |
|---|---|
| 2 | $T_2$ |
| " | " |
| " | " |
| " | " |
| " | " |
| " | " |
| " | " |
| " | " |
| 93 | $T_{93}$ |
| 94 | $T_{94}$ |
| 95 | $T_{95}$ |

In step 1403, the zeroth, twenty third, forty seventh, seventy first and ninety fifth time stamps are used to calculate a difference between a written track on magnetic tape and the path traced by a read head during a read operation. It will be understood by those skilled in the art that the invention is not limited to use of particular time stamps listed in step 1403. In step 1404, an angle around the drum is calculated using equation (1) described herein before. In step 1405, ideal drum angles for ideal fragments 1303, 1305, 1306, 1307 and 1309 are read from a memory device within servo 800. In step 1406, the ideal angles around the drum contained in step 1405 are modified by adding the TT calibration value obtained in steps 1110-1115 described herein before using the following equation:

$$\text{Modified ideal angle round drum for } T_x = theta\ (T_x) + TT\ calibration \qquad \text{(Equation 4)}$$

Where $T_x$ represents the timestamps listed in step 1403, and theta ($T_x$) is the ideal drum angle obtained in step 1405. In step 1407, differences between the drum angles calculated in step 1404 and step 1406 are obtained and stored in a memory device. In step 1408, each difference calculated in step 1407 is converted into a width error using the following equation:

$$\text{Width error} = \text{difference between drum angles x tan (y)} \qquad \text{(Equation 5):}$$

Where the difference between drum angles is the difference between the modified ideal drum angle for each time stamp obtained 1404 and the drum angle obtained in step 1406, and tan (y) is the tangent of the azimuth angle made by ideal track 1201 with respect to edge of the magnetic tape 201. In step 1409, the width errors calculated for each time stamp in step 1408 are combined using an algorithm to derive a difference between a written track on magnetic tape and a path traced by a read head during a read operation.

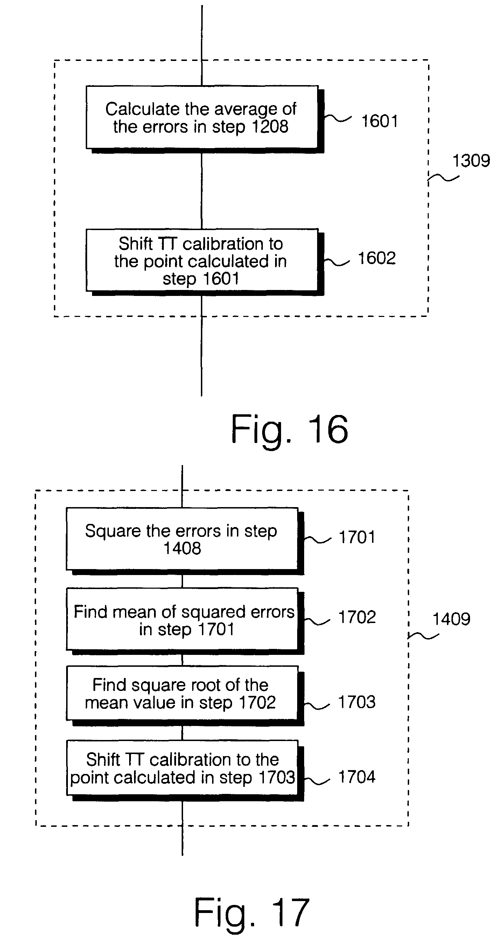

Referring to Fig. 15 herein, there is illustrated schematically steps for combining the plurality of width errors calculated in step 1408 described herein before according to the first specific method herein into an overall error value which is sent to servo 800 to modify the speed of the tape 201. In step 1501 a largest negative width error is identified and stored in a memory device. In step 1502, a largest positive width error calculated in step 1408 is identified and stored in a memory device. In step 1503, a mean width error is calculated from the width errors identified in steps 1501 and 1502. The mean error is sent to servo 800 to modify the speed of the magnetic tape 201 past the rotating drum 102.

Referring to Fig. 16 herein, there is illustrated schematically steps according to a second specific method of the present invention. The steps illustrated in Fig. 16 replace the steps shown in Fig. 15 of the first method. All other steps of the second method are the same as for the first method. The steps use width errors to minimize the difference between a written track on tape and a path traced by a read head during a read operation. In step 1601, an average width error is calculated from the width errors determined in step 1408. In step 1602, the average width error calculated in step 1601 is sent to the servo 800 to modify the tape speed of the magnetic tape 201.

Referring to Fig. 17 herein, there is illustrated schematically steps according to a third method described herein. The processing steps illustrated in Fig. 17 replace those described with reference to Fig. 15 to which they form an alternative. All other steps of the third method are as described in relation to the first method herein. The steps shown in Fig. 17 are for minimizing the difference between a written track on magnetic tape and a path traced by a read head during a read operation. In step 1701, the width errors calculated in step 1408 are squared. In step 1702, a mean square width error is calculated from the squared width errors determined in step 1701. In step 1703, a square root value of the mean squared width error, calculated in step 1702, is determined. In step 1704, a difference between a written track and a path traced by a read head during the read operation calculated in 1703 is sent to the servo 800 to modify the tape speed of the magnetic tape 201.

In the first to third methods, although in step 1403, it is shown to do the drum angle calculation and width error calculation in steps 1404 - 1408 inclusive for each of 5 time stamps $T_0$, $T_{23}$, $T_{47}$, $T_{71}$ and $T_{95}$, in an ideal method where processing power and processing time did not form a practical consideration, steps 1404-1408 would be carried out for each time stamp $T_0$ - $T_{95}$, so that for each written track across the tape, the 5 processing steps 1404 - 1408 would be carried out for each of the 96 time stamp data. However, to reduce processing requirements, whilst gaining the benefit of the method, in the specific methods 1 to 3 herein, processing of steps 1404 - 1408 is carried out only for the 5 time stamps as described in step 1403.

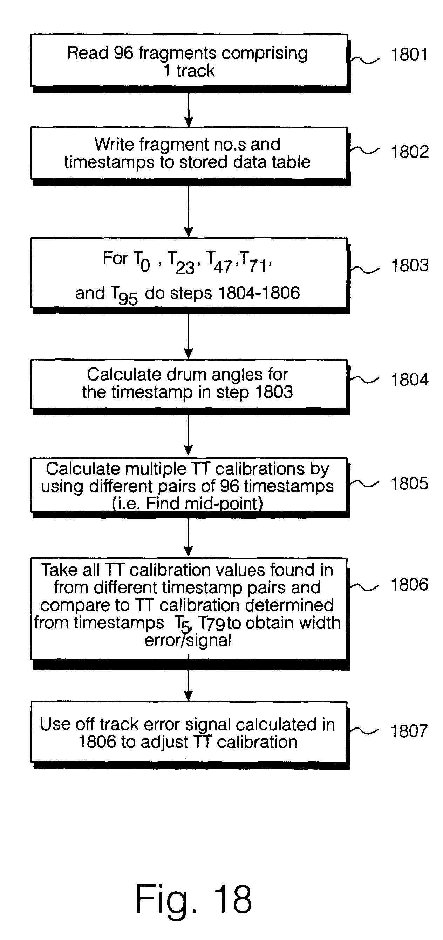

Referring to Fig. 18 herein, there is illustrated a fourth specific method according to the present invention, the fourth specific method comprising a best mode for carrying out the invention.

The fourth method has similarity with the first method, except instead of completing steps 1405-1408 for each of time stamps $T_0$, $T_{23}$, $T_{47}$, $T_{71}$ and $T_{95}$, steps 1405 - 1408 are replaced by a simplified set of data processing steps 1805 - 1806 as illustrated in Fig. 18 herein. Instead of calculating a width error for each time stamp $T_0$, $T_{23}$, $T_{47}$, $T_{71}$ and $T_{95}$, that is to say calculating a width error for each of 5 time stamps per written track e.g. 401, 402 etc. The data processing requirement is reduced in the fourth method as compared with the first to third methods.

Implementation of the fourth specific method herein may not necessarily give an absolute performance advantage over the first to third specific methods in terms of accuracy of positioning of magnetic tape 201 relative to the rotating read head. However, there is an advantage in reduced data processing requirement in the specific method as compared with the first to third specific methods herein before. In a practical implementation, firmware which carries out the processing steps of the specific methods herein may need to share processing capability with other tasks in a data storage device. Therefore, there is an advantage in reducing the data processing requirement for alignment of the read head with written tracks on a data storage medium, to allow for sharing of processor capability with other functions.

In step 1801 during a read operation of a track, 96 fragments comprising the track are read from the magnetic tape. In step 1802 a header field of each fragment is examined, and a fragment number which was associated with each respective fragment at time at which the fragment was read is written to a table stored in a memory device within servo 800. The fragment numbers may be stored in a table as illustrated in table 1 herein before. Each fragment 0-95 is stored with a corresponding respective time stamp $T_0$ - $T_{95}$. In step 1803, the zeroth, 23rd, 47th, 71st and 95th time stamps are used to calculate a difference between a written track on the magnetic tape, and the path traced by the read head during the read operation. The method is not limited to use of these particular fragment numbers and their corresponding time stamps, and in a modification to the fourth method, all time stamps of the zeroth to 95th fragment ($T_0$ - $T_{95}$ inclusive) may have a difference value calculated. In step 1804, an angle around the drum, corresponding to each selected time stamp is calculated using an algorithm effecting equation (1) as described herein before.

In steps 1805 and 1806, multiple TT calibration values are calculated using pairs of the 96 time stamps. This produces an original TT calibration point signal (as in the first to third methods), but also a plurality of other TT calibration values which are slightly different to the original TT calibration value, due to the curvature of the track. Effectively, for each selected pair of time stamps on a track a mid point of the pair of time stamps is calculated. For each track, a plurality of such time stamp mid points are generated. For example, the mid point between $T_4$ and $T_{92}$ may be calculated, a mid point between $T_5$ and $T_{91}$, a mid point between $T_6$ and $T_{90}$ and so on, for all time stamps on the track.

All the TT pair mid point values are compared to the TT calibration values determined by time stamps $T_{15}$ and $T_{79}$ obtained as illustrated with reference to Fig. 5 herein, (or any other time stamp values for the track which are selected).

In step 1807, the off-track errors calculated in step 1806 are used to adjust the TT calibration by generating an error signal which is sent to servo 800 to modify the speed of the tape relative to the read head, and match the tracking of the read heads across the tape more closely with the existing tracks on the tape.

**Claims**

1. In a data storage device configurable to read a stream of data as a sequence of tracks in a direction transverse to a main length of a data storage medium there is provided a method of minimizing a difference between a read path followed by a read head of said data storage device and a track path followed by a written track of data on said data storage medium said method characterized by comprising the steps of:

   reading from said data storage medium a plurality of data blocks comprising said written track (1401);

storing in a memory device a position within said track of each of said plurality of data blocks (1402);

storing within a memory device a timestamp for each data block of said plurality of read data blocks (1402);

determining a plurality of ideal positions of said read data blocks within said read track;

determining a difference between positions of said read data blocks on said data storage medium and corresponding said ideal positions (1404, 1405, 1406, 1407, 1408, 1804, 1805, 1806); and

using said difference to modify said read path followed by said read head relative to said data storage medium (1409).

2. The method as claimed in claim 1, wherein said read path is modified relative to said written data track according to said difference.

3. The method as claimed in claim 1 or 2, wherein said position of each of said plurality of data blocks within said track(s) of read data is stored as a number.

4. The method as claimed in any of the above claims, wherein said step of determining a difference between positions of said read data blocks on said data storage medium and corresponding ideal positions comprises the steps of:

determining a position of each data block of said plurality of data blocks of said track using a corresponding timestamp (1404);

reading said ideal positions stored within said memory device (1405);

modifying said ideal positions (1406);

determining a difference between said position of said read data block and said modified ideal positions (1407);

determining a width error for each of said read data blocks (1408);

using said width errors in an algorithm to modify said path followed by said read head of said data storage device (1409).

5. The method as claimed in claim 4, wherein said step of determining a position of each data block comprises finding an angular position from said time stamp and a rotation period of a rotating drum on which a said read head is mounted.

6. The method as claimed in claim 5, wherein said angular position is determined from the equation:

$$\text{angle around drum} = \text{timestamp}/(\text{Bheads period}/2)$$

7. The method as claimed in claim 4, wherein said step of modifying said ideal positions comprises determining a plurality of modified ideal data block positions from said ideal data block positions, and from a reference value.

8. The method as claimed in claim 7, wherein said plurality of modified ideal data block positions are determined from the equation:

$$\text{Modified angle around drum for } T_x = \text{Theta (x)} + \text{TT calibration.}$$

9. The method as claimed in claim 4, wherein said width error is determined from the equation:

$$\text{Width error} = \text{error around drum} \times \tan (y)$$

**10.** The method as appendant on claim 4, wherein said algorithm comprises the steps of:

identifying a width error from said plurality of width errors which has a largest negative value (1501);

identifying a width error from said plurality of width errors which has a largest positive value (1502);

calculating an average width error from said largest negative value width error and said largest positive value width error (1503).

**11.** The method as appendant on claim 4, wherein said algorithm comprises the steps of:

calculating an average width error using said plurality of width errors (1601);

using said average width error to modify said path followed by said read head of said data storage device (1602).

**12.** The method as claimed in any of claims 4 to 11, wherein said algorithm comprises the steps of:

calculating a plurality of squared width errors from said plurality of width errors (1701);

calculating an average squared width error from said plurality of squared width errors (1702);

calculating a square root of said average squared width error (1703);

using said square root of said average width error to modify said path followed by said read head of said data storage device (1704).

**13.** The method as claimed in claim 1, wherein said step of determining a difference between positions of said read data blocks on said data storage medium and corresponding said ideal positions comprises:

selecting a plurality of pairs of time stamps from said data track;

for each said pair of time stamps, determining a mid-point of said time stamp pair;

for each said mid-point, comparing said mid-point with an equivalent said ideal position of said read data blocks within said read track.

**14.** The method as claimed in any one of the above claims, wherein said data storage device comprises a helical scan magnetic tape data storage device.

**15.** The method as claimed in any one of the above claims, wherein said data storage medium comprises a magnetic tape (201).

**16.** A data storage device configurable to store a stream of data as a sequence of tracks on a data storage medium wherein said stream of data is partitioned into a plurality of data blocks characterized by comprising:

a means for writing said plurality of data blocks to said data storage medium (210,230);

a means for reading said plurality of data blocks from said data storage medium (220, 240);

a means for determining plurality of times when each data block of said plurality of data blocks is read;

a memory device for storing said plurality of times of reading said plurality of data blocks;

memory means storing a position of said plurality of data blocks in each track of said sequence of tracks;

a means for determining a difference between a path followed by a written track comprising said plurality of data blocks and a path followed by said reading means; and

a means for modifying a speed of said data storage medium past said reading means and said writing means (800, 810).

17. The data storage device as claimed in claim 16, wherein said data storage medium comprises a magnetic tape.

18. The data storage device as claimed in claims 16 or 17, wherein said data storage device comprises a helical scan magnetic data storage device.

Fig. 1

Fig. 3

Fig. 2

201

401

405

402 403 404

# Fig. 4

201

X

6.8 μm

a

b

X'

# Fig. 5

201

601 602 603

4 mm

# Fig. 6

201

710

711 700

714

712 713

# Fig. 7

Prior Art
Fig. 8

Fig. 9

Fig. 10

Obtain timestamps $T_{15}$ and $T_{79}$ from a written track ~1110

Calculate an angle around the drum for each timestamp ~1120

Interpolate an angle around the drum for a mid-point of the written track ~1130

Read an ideal angle around drum for the mid-point of the track from a memory device ~1140

TT calibration = interpolated mid-point value - ideal mid-point value ~1150

# Fig. 11
# (Prior Art)

# Fig. 12
# (Prior Art)

## Fig. 13

Find which error in step 1408 has largest negative value — 1501

Find which error in step 1408 has largest positive value — 1502

Find the midpoint between the errors in steps 1501 and 1502 and shift TT calibration to that point — 1503

1409

## Fig. 15

| | |
|---|---|
| Read 96 fragments comprising 1 track | 1401 |
| Write fragment no.s and timestamps to a table | 1402 |
| For $T_0$, $T_{23}$, $T_{47}$, $T_{71}$, and $T_{95}$ do steps 1404-1409 | 1403 |
| Calculate drum angles for the timestamp in step 1403 | 1404 |
| Obtain ideal drum angles for timestamps in step 1403 from stored values | 1405 |
| Modify ideal drum angle values by adding interpolated TT calibration value | 1406 |
| Calculate the difference between the drum angles in step 1404 and 1406 | 1407 |
| Calculate the width error for each timestamp in step 1403 | 1408 |
| Use offtrack errors calculated in 1408 to adjust TT calibration | 1409 |

Fig. 14

```
┌ ─ ─ ─ ─ ─ ─ ─ ─ ─ ─ ─ ─ ─ ─ ─ ─ ─ ─ ─ ─ ┐
│                                          │
│    ┌──────────────────────┐              │
│    │  Calculate the average of │          │         1309
│    │  the errors in step 1208 │──── 1601 │
│    └──────────────────────┘              │
│                                          │
│    ┌──────────────────────┐              │
│    │  Shift TT calibration to │           │
│    │  the point calculated in │── 1602   │
│    │       step 1601        │            │
│    └──────────────────────┘              │
│                                          │
└ ─ ─ ─ ─ ─ ─ ─ ─ ─ ─ ─ ─ ─ ─ ─ ─ ─ ─ ─ ─ ┘
```

# Fig. 16

```
┌ ─ ─ ─ ─ ─ ─ ─ ─ ─ ─ ─ ─ ─ ─ ─ ─ ─ ─ ─ ─ ┐
│                                          │
│    ┌──────────────────────┐              │
│    │  Square the errors in step │── 1701 │
│    │          1408          │            │
│    └──────────────────────┘              │
│    ┌──────────────────────┐              │         1409
│    │ Find mean of squared errors │ 1702 │
│    │       in step 1701       │          │
│    └──────────────────────┘              │
│    ┌──────────────────────┐              │
│    │   Find square root of the │── 1703  │
│    │  mean value in step 1702 │          │
│    └──────────────────────┘              │
│    ┌──────────────────────┐              │
│    │  Shift TT calibration to the │ 1704 │
│    │ point calculated in step 1703 │     │
│    └──────────────────────┘              │
│                                          │
└ ─ ─ ─ ─ ─ ─ ─ ─ ─ ─ ─ ─ ─ ─ ─ ─ ─ ─ ─ ─ ┘
```

# Fig. 17

Read 96 fragments comprising
1 track — 1801

Write fragment no.s and
timestamps to stored data table — 1802

For $T_0$ , $T_{23}$, $T_{47}$, $T_{71}$,
and $T_{95}$ do steps 1804-1806 — 1803

Calculate drum angles for
the timestamp in step 1803 — 1804

Calculate multiple TT calibrations by
using different pairs of 96 timestamps
(i.e. Find mid-point) — 1805

Take all TT calibration values found in
from different timestamp pairs and
compare to TT calibration determined
from timestamps $T_5$, $T_{79}$ to obtain width
error/signal — 1806

Use off track error signal calculated in
1806 to adjust TT calibration — 1807

# Fig. 18

**European Patent Office** **EUROPEAN SEARCH REPORT**

Application Number

EP 99 30 5762

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | DE 43 32 784 A (PHILIPS PATENTVERWALTUNG) 30 March 1995 (1995-03-30) * abstract; claims 1-3; figures * --- | 1,2, 14-18 | G11B15/467 |
| A | GB 2 315 152 A (SONY CORP) 21 January 1998 (1998-01-21) * abstract; figures * * page 1, line 7 - page 18, line 8 * --- | 1,2, 14-18 | |
| A | PATENT ABSTRACTS OF JAPAN vol. 098, no. 001, 30 January 1998 (1998-01-30) & JP 09 237413 A (VICTOR CO OF JAPAN LTD), 9 September 1997 (1997-09-09) * abstract; figure * & US 5 822 491 A (SASAKI ET AL) 13 October 1998 (1998-10-13) --- | 1,14-18 | |
| A | EP 0 831 476 A (HEWLETT PACKARD CO) 25 March 1998 (1998-03-25) * abstract; figures * --- | 1,2, 14-18 | |
| A | US 4 777 543 A (NISHIJIMA HIDEO ET AL) 11 October 1988 (1988-10-11) * abstract; figures * --- | 1,14-18 | TECHNICAL FIELDS SEARCHED (Int.Cl.7) G11B |
| D,A | US 5 050 018 A (GEORGIS STEVEN P ET AL) 17 September 1991 (1991-09-17) * abstract; figures * --- | 1,14-18 | |
| A | EP 0 393 995 A (SONY CORP) 24 October 1990 (1990-10-24) * abstract; figures * --- | 1,14-18 | |
| A | EP 0 707 311 A (SONY CORP) 17 April 1996 (1996-04-17) * abstract; figures * --- | 1,14-18 | |

-/--

The present search report has been drawn up for all claims

| Place of search | Date of completion of the search | Examiner |
|---|---|---|
| THE HAGUE | 3 December 1999 | Declat, M |

## EUROPEAN SEARCH REPORT

**European Patent Office**

**Application Number**

EP 99 30 5762

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 671 735 A (HEWLETT PACKARD LTD) 13 September 1995 (1995-09-13) * abstract; figures * --- | 1,14-18 | |
| A | EP 0 594 141 A (MATSUSHITA ELECTRIC IND CO LTD) 27 April 1994 (1994-04-27) * abstract; figures * ----- | 1,14-18 | |

TECHNICAL FIELDS SEARCHED (Int.Cl.7)

The present search report has been drawn up for all claims

| Place of search | Date of completion of the search | Examiner |
|---|---|---|
| THE HAGUE | 3 December 1999 | Declat, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 99 30 5762

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-1999

| Patent document cited in search report | | Publication date | Patent family member(s) | | Publication date |
|---|---|---|---|---|---|
| DE 4332784 | A | 30-03-1995 | NONE | | |
| GB 2315152 | A | 21-01-1998 | JP | 9245394 A | 19-09-1997 |
| | | | JP | 9251684 A | 22-09-1997 |
| | | | WO | 9733279 A | 12-09-1997 |
| JP 09237413 | A | 09-09-1997 | US | 5822491 A | 13-10-1998 |
| EP 0831476 | A | 25-03-1998 | NONE | | |
| US 4777543 | A | 11-10-1988 | JP | 1939092 C | 09-06-1995 |
| | | | JP | 6064790 B | 22-08-1994 |
| | | | JP | 62047854 A | 02-03-1987 |
| | | | DE | 3682343 A | 12-12-1991 |
| | | | EP | 0213549 A | 11-03-1987 |
| US 5050018 | A | 17-09-1991 | AT | 124162 T | 15-07-1995 |
| | | | AU | 637558 B | 27-05-1993 |
| | | | AU | 7794591 A | 11-11-1991 |
| | | | CA | 2080592 A | 20-10-1991 |
| | | | DE | 69110673 D | 27-07-1995 |
| | | | DE | 69110673 T | 16-11-1995 |
| | | | EP | 0525108 A | 03-02-1993 |
| | | | JP | 7031795 B | 10-04-1995 |
| | | | JP | 5505051 T | 29-07-1993 |
| | | | WO | 9116704 A | 31-10-1991 |
| EP 0393995 | A | 24-10-1990 | JP | 2276051 A | 09-11-1990 |
| | | | JP | 2626043 B | 02-07-1997 |
| | | | AU | 633556 B | 04-02-1993 |
| | | | AU | 5361890 A | 18-10-1990 |
| | | | CA | 2014497 A | 17-10-1990 |
| | | | DE | 69020040 D | 20-07-1995 |
| | | | DE | 69020040 T | 26-10-1995 |
| | | | US | 5177647 A | 05-01-1993 |
| EP 0707311 | A | 17-04-1996 | JP | 8115547 A | 07-05-1996 |
| | | | CN | 1151064 A | 04-06-1997 |
| | | | SG | 45116 A | 16-01-1998 |
| | | | US | 5745317 A | 28-04-1998 |
| EP 0671735 | A | 13-09-1995 | JP | 7287902 A | 31-10-1995 |
| EP 0594141 | A | 27-04-1994 | JP | 6139659 A | 20-05-1994 |
| | | | JP | 6150465 A | 31-05-1994 |
| | | | KR | 130953 B | 18-04-1998 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 99 30 5762

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-1999

| Patent document cited in search report | Publication date | Patent family member(s) | Publication date |
|---|---|---|---|
| EP 0594141 A | | US 5510938 A | 23-04-1996 |